# EUROPEAN PATENT APPLICATION

(11) **EP 3 958 365 A1**
(43) Date of publication of application: **23.02.2022**
(21) Application number: 20899936.7
(22) Date of filing: 18.11.2020
(51) Int. Cl.: H01M 10/056, H01M 10/0565, H01M 10/052

(54) **SOLID-LIQUID HYBRID ELECTROLYTE MEMBRANE, MANUFACTURING METHOD THEREFOR, AND LITHIUM SECONDARY BATTERY COMPRISING SAME**

(30) Priority: 13.12.2019 KR 20190167041
(71) Applicant: LG ENERGY SOLUTION, LTD., Seoul 07335 (KR)
(72) Inventor: LEE, Jung-Pil, Daejeon 34122 (KR); KIM, Ji-Young, Daejeon 34122 (KR); KANG, Sung-Joong, Daejeon 34122 (KR)
(74) Representative: Hoffmann Eitle
(86) International application number: PCT/KR2020/016292
(87) International publication number: WO 2021/118094

(57) **Abstract**

An aspect of the present invention relates to a solid-liquid hybrid electrolyte membrane and a method for manufacturing same, the electrolyte membrane comprising: a plurality of solid polymer particles and a small amount of liquid electrolyte, the solid polymer particles being packed and in contact with each other; and a porous structure having a pore structure between the solid polymer particles, wherein the liquid electrolyte is in pores of the porous structure or surface contact portions of the solid polymer particles, or covers the surfaces of the solid polymer particles. According to an aspect of the present invention, a solid-liquid hybrid electrolyte membrane which can be deformed by external pressure due to lack of use of a solid electrolyte can be provided. Also, a solid-liquid hybrid electrolyte membrane having low resistance due to lack of use of a binder polymer can be provided. Meanwhile, according to an aspect of the present invention, by including a small amount of liquid electrolyte, improved ionic conductivity as compared to conventional solid electrolyte batteries can be ensured.

## Description

### TECHNICAL FIELD

The present disclosure relates to a solid-liquid hybrid electrolyte membrane, a lithium secondary battery including the solid-liquid hybrid electrolyte membrane, and a method for manufacturing the solid-liquid hybrid electrolyte membrane.

The present application claims priority to Korean Patent Application No. 10-2019-0167041 filed on December 13, 2019 in the Republic of Korea, the disclosures of which are incorporated herein by reference.

### BACKGROUND ART

Importance of lithium secondary batteries has been increased, as use of vehicles, computers and portable terminals has been increased. Particularly, there is a high need for development of lithium secondary batteries having a low weight and providing high energy density.

The lithium secondary battery can be obtained by interposing a separator between a positive electrode and a negative electrode and injecting a liquid electrolyte thereto, or by interposing a solid electrolyte membrane between a positive electrode and a negative electrode.

However, in the case of a lithium-ion battery using a liquid electrolyte, the negative electrode and the positive electrode are divided from each other by the separator. Therefore, when the separator is damaged by deformation or external impact, a short-circuit may occur, resulting in a risk, such as overheating or explosion.

A lithium secondary battery using a solid electrolyte is advantageous in that it has enhanced safety and prevents leakage of an electrolyte to improve the reliability of the battery. However, even though a solid electrolyte is used, there is still a need for development of a solid electrolyte membrane having high energy density and improved processability. In addition, in the case of a solid electrolyte, it has low ion conductivity to cause the problem of degradation of performance, and shows a significantly larger thickness as compared to the thickness of a conventional porous polyolefin-based separator to cause loss of energy density. Under these circumstances, there is a need for a technical solution capable of overcoming the problems.

### DISCLOSURE

### Technical Problem

The present disclosure is designed to solve the problems of the related art, and therefore the present disclosure is directed to providing a solid-liquid hybrid electrolyte membrane which has a reduced thickness as compared to commercially available solid electrolyte membranes, while ensuring ion conductivity.

The present disclosure is also directed to providing a solid-liquid hybrid electrolyte membrane which has improved mechanical strength, even though it is a thinner film as compared to commercially solid electrolyte membranes.

In addition, the present disclosure is directed to providing a solid-liquid hybrid electrolyte membrane which can be formed into a thinner film as compared to commercially available solid electrolyte membranes and has improved energy density per weight to the thickness.

These and other objects and advantages of the present disclosure may be understood from the following detailed description. Also, it will be easily understood that the objects and advantages of the present disclosure may be realized by the means shown in the appended claims and combinations thereof.

### Technical Solution

In one aspect of the present disclosure, there is provided a solid-liquid hybrid electrolyte membrane according to any one of the following embodiments.

According to the first embodiment of the present disclosure, there is provided a solid-liquid hybrid electrolyte membrane including a plurality of solid polymer particles and a small amount of liquid electrolyte, and having an ion conductivity of 1x10⁻⁵ to 1x10⁻¹ S/cm,
wherein the solid polymer particles are packed, while being in contact with one another, and include a porous structure having a pore structure formed among the solid polymer particles,
the liquid electrolyte surrounds the inside of the pores of the porous structure, the portions in which the solid polymer particles are in surface contact with one another, or the surfaces of the solid polymer particles, and
the content of the liquid electrolyte is 1-20 wt% based on 100 wt% of the total content of the solid-liquid hybrid electrolyte membrane.

According to the second embodiment of the present disclosure, there is provided the solid-liquid hybrid electrolyte membrane as defined in the first embodiment, wherein the porous structure itself has a higher porosity than the porosity of the solid-liquid hybrid electrolyte membrane.

According to the third embodiment of the present disclosure, there is provided the solid-liquid hybrid electrolyte membrane as defined in the first or the second embodiment, which has a higher ion conductivity than the ion conductivity of the porous structure itself.

According to the fourth embodiment of the present disclosure, there is provided the solid-liquid hybrid electrolyte membrane as defined in any one of the first to the third embodiments, wherein the solid polymer particle is an engineering plastic resin.

According to the fifth embodiment of the present disclosure, there is provided the solid-liquid hybrid electrolyte membrane as defined in any one of the first to the fourth embodiments, wherein the solid polymer particle includes any one selected from polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more of them.

According to the sixth embodiment of the present disclosure, there is provided the solid-liquid hybrid electrolyte membrane as defined in any one of the first to the fifth embodiments, which is free of a binder polymer.

According to the seventh embodiment of the present disclosure, there is provided the solid-liquid hybrid electrolyte membrane as defined in any one of the first to the sixth embodiments, wherein the porous structure itself has a porosity of 1-90 vol%, and the solid-liquid hybrid electrolyte membrane has a porosity of 0-80 vol%, which is lower than the porosity of the porous structure itself.

According to the eighth embodiment of the present disclosure, there is provided the solid-liquid hybrid electrolyte membrane as defined in any one of the first to the seventh embodiments, which has a thickness of 10-500 µm.

In another aspect of the present disclosure, there is provided a lithium secondary battery according to any one of the following embodiments.

According to the ninth embodiment of the present disclosure, there is provided a solid-state battery which includes a positive electrode including a solid electrolyte, a negative electrode including a solid electrolyte, and a separator interposed between the positive electrode and the negative electrode, wherein the separator includes the solid-liquid hybrid electrolyte membrane as defined in any one of the first to the eighth embodiments.

According to the tenth embodiment of the present disclosure, there is provided a lithium-ion battery including a positive electrode, a negative electrode, a separator interposed between the positive electrode and the negative electrode, and a liquid electrolyte, wherein the separator includes the solid-liquid hybrid electrolyte membrane as defined in any one of the first to the eighth embodiments.

In still another aspect of the present disclosure, there is provided a method for manufacturing a solid-liquid hybrid electrolyte membrane according to any one of the following embodiments.

According to the eleventh embodiment of the present disclosure, there is provided a method for manufacturing a solid-liquid hybrid electrolyte membrane, including the steps of:
(S1) preparing a plurality of solid polymer particles itself, or a dispersion containing a plurality of solid polymer particles dispersed in a solvent;
(S2) applying the solid polymer particles itself or the dispersion onto a substrate, followed by drying;
(S3) pressurizing the resultant product of step (S2) to form a porous structure; and
(S4) coating the porous structure with a small amount of liquid electrolyte,
wherein the solid polymer particles are packed, while being in contact with one another, and include a porous structure having a pore structure formed among the solid polymer particles,
the liquid electrolyte surrounds the portions in which the solid polymer particles are in surface contact with one another, or the surfaces of the solid polymer particles, and
the content of the liquid electrolyte is 1-20 wt% based on 100 wt% of the total content of the solid-liquid hybrid electrolyte membrane.

According to the twelfth embodiment of the present disclosure, there is provided the method for manufacturing a solid-liquid hybrid electrolyte membrane as defined in the eleventh embodiment, wherein the substrate is any one selected from a release film, a porous polymer substrate or an electrode.

According to the thirteenth embodiment of the present disclosure, there is provided the method for manufacturing a solid-liquid hybrid electrolyte membrane as defined in the eleventh or the twelfth embodiment, wherein the pressurization in step (S3) is a step of binding the solid polymer particles physically or chemically with one another to obtain a porous structure having a pore structure formed among the solid polymer particles.

According to the fourteenth embodiment of the present disclosure, there is provided the method for manufacturing a solid-liquid hybrid electrolyte membrane as defined in any one of the eleventh to the thirteenth embodiment, wherein the coating in step (S4) is carried out by any one of dip coating, spray coating and drop coating.

### Advantageous Effects

According to an embodiment of the present disclosure, it is possible to obtain a deformable solid-liquid hybrid electrolyte membrane by using solid polymer particles instead of inorganic particles.

In addition, since a particle-shaped polymer capable of being compressed is used, it is possible to provide a solid-liquid hybrid electrolyte membrane having improved mechanical strength. Since no solid electrolyte is used, it is possible to provide a solid-liquid hybrid electrolyte membrane which can be deformed by external pressurization. Further, the polymer particles are bound physically with one another, which is favorable to porosity and pore channel formation.

According to an embodiment of the present disclosure, since no binder polymer is used, it is possible to provide a solid-liquid hybrid electrolyte membrane showing low resistance.

Meanwhile, according to an embodiment of the present disclosure, a small amount of liquid electrolyte is used to ensure improved ion conductivity as compared to conventional solid electrolyte batteries, while preventing electrolyte leakage.

In addition, it is possible to provide a solid-liquid hybrid electrolyte membrane which can be formed into a thinner film as compared to commercially available solid electrolyte membranes and has improved energy density per weight to the thickness.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the structure of the solid-liquid hybrid electrolyte membrane according to an embodiment of the present disclosure.
FIG. 2 is a schematic view illustrating the method for manufacturing a solid-liquid hybrid electrolyte membrane according to an embodiment of the present disclosure.
FIG. 3 illustrates an image of the solid-liquid hybrid electrolyte membrane obtained according to Example 6.
FIG. 4 illustrates an image of the electrolyte membrane obtained according to Comparative Example 3.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements, unless otherwise stated.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and 'bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to a solid-liquid hybrid electrolyte membrane, a method for manufacturing the same, and a lithium secondary battery including the same.

In one aspect of the present disclosure, there is provided a solid-liquid hybrid electrolyte membrane including a plurality of solid polymer particles and a small amount of liquid electrolyte.

Herein, the solid polymer particles are packed, while being in contact with one another, and the solid-liquid hybrid electrolyte membrane include a porous structure having a pore structure formed among the solid polymer particles.

In addition, the solid-liquid hybrid electrolyte membrane according to an embodiment of the present disclosure includes a liquid electrolyte covering the portions in which the solid polymer particles are in surface contact with one another, or the surfaces of the solid polymer particles.

Further, the solid polymer particles are pressurized to form a porous structure first. Then, the resultant porous structure is coated with a small amount of liquid electrolyte. Therefore, there is no separate pressurization step after coating the liquid electrolyte, the solid-liquid hybrid electrolyte membrane is prevented from liquid electrolyte leakage, shows an ion conductivity equal to or similar to the ion conductivity of the conventional solid electrolyte membrane, and has uniform ion conductivity.

The solid-liquid hybrid electrolyte membrane does not use inorganic particles but uses polymer particles, and thus can be deformed. In addition, the solid-liquid hybrid electrolyte membrane uses polymer particles instead of a solid electrolyte, and thus can be deformed by external pressurization. Further, the solid polymer particles are bound physically with one another, which is favorable to pore formation and pore channel formation.

Meanwhile, since the solid-liquid hybrid electrolyte membrane includes a small amount of liquid electrolyte, it is possible to prevent electrolyte leakage and to ensure improved ion conductivity as compared to conventional solid electrolyte membranes.

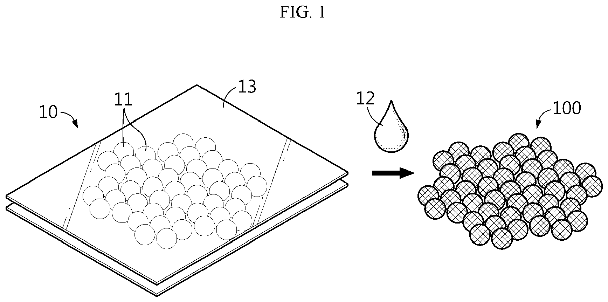

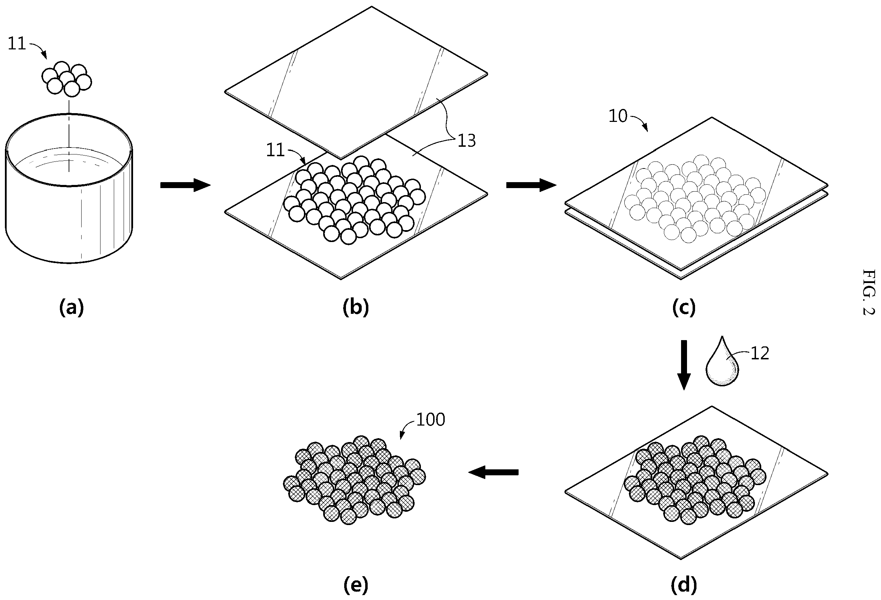

FIG. 1 is a schematic view illustrating the structure of the solid-liquid hybrid electrolyte membrane according to an embodiment of the present disclosure. FIG. 2 is a schematic view illustrating the method for manufacturing a solid-liquid hybrid electrolyte membrane according to an embodiment of the present disclosure. Hereinafter, the present disclosure will be explained in more detail with reference to the accompanying drawings.

Referring to FIG. 1, the solid-liquid hybrid electrolyte membrane 100 according to an embodiment of the present disclosure includes a plurality of solid polymer particles 11 and a small amount of liquid electrolyte 12.

The solid polymer particle is present in a solid state at room temperature, and may be a polymer material having low solubility to the electrolyte.

Meanwhile, according to the present disclosure, the solid polymer particles are surrounded with the liquid electrolyte, and preferably have low solubility to the liquid electrolyte. In addition, the solid polymer particle may be a polymer having excellent chemical resistance, preferably.

Particularly, the solid polymer particles may have a solubility of less than 30%, when being impregnated with a liquid electrolyte, such as ethylene carbonate : ethyl methyl carbonate = 30 : 70 (vol%). More particularly, the solid polymer particles may have a solubility of less than 20%, less than 15%, or less than 10%. Therefore, the solid polymer particles may be present in a solid state, even when they are dispersed in a solvent.

Particularly, the solid polymer particle may be an engineering plastic resin.

Herein, the engineering plastic resin may include any one selected from polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and poly(methyl methacrylate), or two or more of them. In addition, the engineering plastic resin may have a molecular weight of 100,000-10,000,000 Da.

The solid polymer particles have compressibility, unlike the conventional commercially available inorganic particles. Therefore, it is possible to provide a lithium secondary battery having increased energy density per weight to the thickness. In addition, it is possible to provide a deformable solid-liquid hybrid electrolyte membrane by using solid polymer particles instead of the conventional solid electrolyte. The solid polymer particles may have ductility, and thus can be linked physically or chemically under pressurization or heating. As a result, the solid-liquid hybrid electrolyte membrane according to the present disclosure requires no separate binder polymer. In other words, the solid-liquid hybrid electrolyte membrane may be free of a binder polymer. Therefore, it is possible to provide a solid-liquid hybrid electrolyte membrane showing reduced resistance.

According to an embodiment of the present disclosure, the solid polymer particles may have an average particle diameter of 100 nm to 10 µm, 200 nm to 5 µm, or 500 nm to 2 µm. When the solid polymer particles have a particle diameter controlled within the above-defined range, it is possible to obtain a suitable pore size, to prevent a short-circuit, and to allow sufficient impregnation with the liquid electrolyte.

The solid polymer particles are packed, while being in contact with one another, and a pore structure is formed among the solid polymer particles.

Herein, the solid polymer particles may be in contact with one another by being packed under external pressure. For example, the external pressure may be monoaxial pressurization, roll pressing, cold isostatic press (CIP), hot isostatic press (HIP), or the like. However, the scope of the present disclosure is not limited thereto, and any physical or chemical process capable of adhering the solid polymer particles with one another may be used.

Herein, the solid polymer particles may undergo plastic deformation beyond the physical elastic region of the particles by the above-mentioned external pressure, and thus may have an increased contact surface between particles as compared to the particles before applying the pressure or undergo a change in volume to generate a new contact surface, or the adhesion of the adhesion surface between particles may be increased due to the plastic deformation to form a desired structure. For example, the solid polymer particles may be pelletized.

As described hereinafter, the solid-liquid hybrid electrolyte membrane includes a small amount of liquid electrolyte, and thus can transport lithium ions therethrough. In other words, according to an embodiment of the present disclosure, it is possible to provide an electrolyte membrane having high ion conductivity, even when using no solid electrolyte.

The content of the liquid electrolyte is 1-20 wt% based on the total weight of the solid-liquid hybrid electrolyte membrane. Particularly, the content of the liquid electrolyte may be 1 wt% or more, 2 wt% or more, 3 wt% or more, 4 wt% or more, or 5 wt% or more, based on the total weight of the solid-liquid hybrid electrolyte membrane, and 20 wt% or less, 15 wt% or less, 10 wt% or less, or 5 wt% or less, based on the total weight of the solid-liquid hybrid electrolyte membrane.

Even though the solid-liquid hybrid electrolyte membrane according to an embodiment of the present disclosure includes a small amount of liquid electrolyte as mentioned above, the solid polymer particles have a low solubility to the liquid electrolyte, and thus the liquid electrolyte may cover the inside of the porous structure. In this manner, it is possible to improve the ion conductivity of the solid-liquid hybrid electrolyte membrane. In addition, since the solid-liquid hybrid electrolyte membrane includes a small amount of liquid electrolyte, it can be prevented from electrolyte leakage, and thus can be stable.

The reason why such a small amount of liquid electrolyte can be used is that the solid polymer particles form a porous structure and show compatibility with the liquid electrolyte.

Meanwhile, according to an embodiment of the present disclosure, even though the liquid electrolyte is present in a small amount, it is possible to provide a solid-liquid hybrid electrolyte membrane having high ion conductivity. This is because the liquid electrolyte is dispersed homogeneously on the surfaces of the solid polymer particles or the portions in which the solid polymer particles are in surface contact with one another. According to an embodiment of the present disclosure, dip coating, spray coating or drop coating may be used to carry out such homogeneous impregnation with the liquid electrolyte.

According to an embodiment of the present disclosure, the liquid electrolyte cannot dissolve the solid polymer particles and may have excellent chemical resistance and electrochemical resistance.

For example, the liquid electrolyte is a salt having a structure of A⁺B⁻, wherein A⁺ may include an alkali metal cation such as Li⁺, Na⁺, K⁺ or a combination thereof, and B⁻may include an anion such as PF₆⁻, BF₄⁻, Cl⁻, Br⁻, I⁻, ClO₄", AsF₆⁻, CH₃CO₂⁻, CF₃SO₃⁻, N(CF₃SO₂)₂⁻, C(CF₂SO₂)₃⁻ or a combination thereof, wherein the salt may be dissolved or dissociated in an organic solvent, such as an ether-based solvent, carbonate-based solvent, nitrile-based solvent, or the like, but is not limited thereto.

For example, the ether-based organic solvent may include dimethyl ether, diethyl ether, dipropyl ether, methyl ethyl ether, methyl propyl ether, ethyl propyl ether, 1,2-dimethoxyethane, or a mixture of two or more of them.

For example, the carbonate-based organic solvent may include propylene carbonate (PC), ethylene carbonate (EC), diethyl carbonate (DEC), dimethyl carbonate (DMC), dipropyl carbonate (DPC), ethyl methyl carbonate (EMC), or a mixture of two or more of them.

For example, the nitrile-based organic solvent may include acetonitrile, succinonitrile, or a mixture of two or more of them.

In addition to the above-listed solvents, the organic solvent may include dimethyl sulfoxide, dimethoxyethane, diethoxyethane, tetrahydrofuran, N-methyl-2-pyrrolidone (NMP), gamma-butyrolactone (γ-butyrolactone) or a mixture thereof, but is not limited thereto.

In the solid-liquid electrolyte membrane according to an embodiment of the present disclosure, the porous structure itself may have a higher porosity than the porosity of the solid-liquid hybrid electrolyte membrane.

Particularly, the porous structure itself may have a porosity of 1-90 vol%, 5-80 vol%, 10-70 vol%, or 20-50 vol%,

The solid-liquid hybrid electrolyte membrane may have a lower porosity than the porosity of the porous structure itself, and particularly, may have a porosity of 0-80 vol%, 5-60 vol%, 10-30 vol%, or 15-20 vol%.

In addition, in the solid-liquid hybrid electrolyte membrane according to an embodiment of the present disclosure, the ion conductivity of the solid-liquid hybrid electrolyte membrane may be higher than the ion conductivity of the porous structure itself.

Further, the ion conductivity of the solid-liquid electrolyte membrane according to an embodiment may have a higher ion conductivity than the ion conductivity of the porous structure itself, and may have an ion conductivity of 1x10⁻⁵ to 1x10⁻¹ S/cm, 1x10⁻⁴ to 1x10⁻² S/cm, or 1x10⁻⁴ to 5x10⁻³ S/cm.

As described above, even though the solid-liquid hybrid electrolyte membrane according to an embodiment of the present disclosure has a lower porosity as compared to the porous structure itself, it can show a higher ion conductivity as compared to the porous structure itself.

Meanwhile, the porosity and pore size of the porous structure itself and the electrolyte membrane according to the present disclosure may be controlled by adjusting the average particle diameter of the solid polymer particles or the pressurization condition during the manufacture. For example, the porosity and pore size may be controlled by adjusting the roll gap of a roll press, controlling the temperature during the manufacture, or by controlling the content or particle diameter of the solid polymer particles.

According to an embodiment of the present disclosure, the porous structure may have a thickness of 10-500 µm, 20-300 µm, or 30-100 µm. According to an embodiment of the present disclosure, use of a thin film-type porous structure having a thickness of 10-50 µm is favorable in terms of the energy density of a lithium secondary battery obtained subsequently.

According to an embodiment of the present disclosure, the solid-liquid hybrid electrolyte membrane may have a thickness of 10-500 µm, 20-300 µm, or 30-100 µm. According to an embodiment of the present disclosure, a separator in the form of a thin film having thickness of 10-50 µm can be provided, which is favorable to the energy density of a lithium secondary battery obtained subsequently.

According to an embodiment of the present disclosure, the solid-liquid hybrid electrolyte membrane may further include a porous polymer substrate or non-woven web substrate.

Particularly, the non-woven web substrate may include polyolefin, such as polyethylene or polypropylene, polyethylene terephthalate, polyester, polyamide, polyacetal, polycarbonate, polyimide, polyetherether ketone, polyether sulfone, polyphenylene oxide, polyphenylene sulfide, polyethylene naphthalene, or a mixture thereof.

Herein, the porous polymer substrate or non-woven web substrate may include pores having an average diameter of 10 nm to 100 µm, 100 nm to 10 µm, or 500 nm to 5 µm, and may have a porosity of 10-98 vol%, 30-90 vol%, or 40-80 vol%.

Meanwhile, the solid polymer particles may be partially embedded in the pores of the non-woven web substrate, wherein the surfaces of the solid polymer particles and the substrate may be surrounded with the liquid electrolyte.

Meanwhile, the solid polymer particles may be disposed on at least one surface of the non-woven web substrate, wherein the surfaces of the solid polymer particles and the substrate may be surrounded with the liquid electrolyte.

As used herein, the term 'pore' may have various types of pore structures, and any type of pore having an average pore size satisfying the above-defined average pore size, as determined by using porosimetry or as observed through field-emission scanning electron microscopy (FE-SEM), falls within the scope of the present disclosure.

In another aspect of the present disclosure, there is provided a lithium secondary battery according to any one of the following embodiments.

Particularly, there is provided a lithium-ion battery which includes a positive electrode including a solid electrolyte, a negative electrode including a solid electrolyte, and a separator interposed between the positive electrode and the negative electrode, wherein the separator may be the above-described solid-liquid hybrid electrolyte membrane.

Particularly, the lithium secondary battery may be a lithium-ion battery to which a liquid electrolyte is further injected.

According to the present disclosure, each of the positive electrode and the negative electrode includes a current collector, and an electrode active material layer formed on at least one surface of the current collector, wherein the electrode active material layer includes a plurality of electrode active material particles and a solid electrolyte. In addition, the electrodes may further include at least one of a conductive material and a binder resin. Further, the electrode may further include various additives in order to supplement or improve the physicochemical properties of the electrode.

According to the present disclosure, any negative electrode active material may be used, as long as it can be used as a negative electrode active material for a lithium-ion secondary battery. Particular examples of the negative electrode active material may include any one selected from: carbon, such as non-graphitizable carbon or graphitic carbon; metal composite oxides such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb or Ge; Me': Al, B, P, Si, an element of Group 1, Group 2 or Group 3 in the Periodic Table, or halogen; 0 < x ≤ 1; 1 ≤ y ≤ 3; 1 ≤ z ≤ 8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; conductive polymers such as polyacetylene; Li-Co-Ni based materials; titanium oxide; and lithium titanium oxide, or the like, or two or more of them. Particularly, the negative electrode active material may include a carbonaceous material and/or Si.

In the case of the positive electrode, any positive electrode active material may be used with no particular limitation, as long as it can be used as a positive electrode active material for a lithium-ion secondary battery. Particular examples of the positive electrode active material may include, but are not limited to: layered compounds such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1), or Li₂Mn₃MO₈ (wherein M is Fe, Co, Ni, Cu or Zn); lithium manganese composite oxides having a spinel structure and represented by the formula of LiNiₓMn₂₋ₓO₄; LiMn₂O₄ in which Li is partially substituted with an alkaline earth metal ion; disulfide compounds; Fe₂(MoO₄)₃; or the like.

According to the present disclosure, the current collector may include a metal plate having electrical conductivity and may be one selected suitably depending on polarity of electrodes known in the field of secondary batteries.

According to the present disclosure, the conductive material may be added generally in an amount of 1-30 wt% based on the total weight of the mixture including the electrode active material. The conductive material is not particularly limited, as long as it causes no chemical change in the corresponding battery and has conductivity. For example, the conductive material may include any one selected from: graphite, such as natural graphite or artificial graphite; carbon black, such as carbon black, acetylene black, Ketjen black, channel black, furnace black, lamp black, thermal black, or the like; conductive fibers, such as carbon fibers or metallic fibers; metal powder, such as carbon fluoride, aluminum or nickel powder; conductive whisker, such as zinc oxide or potassium titanate; conductive metal oxide, such as titanium oxide; and conductive materials, such as polyphenylene derivatives, or a mixture of two or more of them.

According to the present disclosure, the binder resin is not particularly limited, as long as it is an ingredient which assists binding of the electrode active material with the conductive material, and binding to the current collector. Particular examples of the binder resin may include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene butadiene rubber, fluoro rubber, various copolymers, or the like. In general, the binder resin may be used in an amount of 1-30 wt%, or 1-10 wt%, based on 100 wt% of electrode active material layer.

Meanwhile, according to the present disclosure, each electrode active material layer may include at least one additive, such as an oxidation stabilizing additive, a reduction stabilizing additive, a flame retardant, a heat stabilizer, an anti-fogging agent, or the like, if necessary.

According to the present disclosure, the solid electrolyte may include at least one of a polymeric solid electrolyte, an oxide-based solid electrolyte and a sulfide-based solid electrolyte.

According to the present disclosure, each of the positive electrode and the negative electrode may use a different solid electrolyte, or the same solid electrolyte may be used for two or more battery elements. For example, in the case of a positive electrode, a polymer electrolyte having high oxidation stability may be used as a solid electrolyte. In addition, in the case of a negative electrode, a polymer electrolyte having high reduction stability may be used as a solid electrolyte. However, the scope of the present disclosure is not limited thereto. Since the solid electrolyte mainly functions to conduct lithium ions in the electrodes, any material having a high ion conductivity, such as 10⁻⁷ S/Cm or more, or 10⁻⁷ S/cm or more, may be used, and the solid electrolyte material is not limited to any specific ingredient.

According to the present disclosure, the polymer electrolyte may be a solid polymer electrolyte formed by adding a polymer resin to a lithium salt solvated independently, or may be a polymer gel electrolyte prepared by impregnating a polymer resin with an organic electrolyte containing an organic solvent and a lithium salt.

In still another aspect of the present disclosure, there is provided a secondary battery having the above-described structure. There are also provided a battery module including the secondary battery as a unit cell, a battery pack including the battery module, and a device including the battery pack as a power source. Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

In still another aspect of the present disclosure, there is provided a method for manufacturing a solid-liquid hybrid electrolyte membrane according to any one of the following embodiments. FIG. 2 is a schematic view illustrating the method.

First, a plurality of solid polymer particles itself, or a dispersion including a plurality of solid polymer particles dispersed in a solvent is prepared (SI), as shown in FIG. 2(a). Referring to FIG. 2(a), solid polymer particle powder may be used as the solid polymer particles itself. In a variant, a dispersion including a plurality of solid polymer particles dispersed in a solvent may be used. Herein, reference will be made to the above description about the solid polymer particles. The solvent cannot dissolve the solid polymer particles but can disperse the solid polymer particles therein. For example, the solvent may be ethanol, methanol, or the like.

Next, the solid polymer particles itself or the dispersion is applied to a substrate, followed by drying (S2). When using the solid polymer particles as they are, the application step may be carried out with no drying step. When using the dispersion, a drying step may be carried out to allow evaporation of the solvent. Herein, the application and drying steps may be carried out in the conventional manner known to those skilled in the art. This is shown in FIG. 2(b). As shown in FIG. 2(b), the solid polymer particles may be dispersed in a solvent, and then the dispersion may be coated, in order to apply the solid polymer particles homogeneously onto the substrate 13. Herein, it is preferred that the solvent evaporates, after the dispersion is coated on the substrate, so that a residue may remain. However, the scope of the present disclosure is not limited thereto, and the residue may remain as desired. Herein, the substrate may be any one selected from a release film, a porous polymer substrate and an electrode.

Then, the resultant product of step (S2) may be pressurized to form a porous structure (S3). According to an embodiment of the present disclosure, the solid polymer particles may form a porous structure through a pressurization step. Herein, the solid polymer particles may be bound with one another under pressurization or heating, and thus a separate binder polymer is not required. In this manner, a solid-liquid hybrid electrolyte membrane showing reduced resistance can be obtained, as shown in FIG. 2(c).

For example, the pressurization step may be carried out once or many times with a predetermined interval in order to provide a desired thickness and porosity of the porous structure and/or solid-liquid hybrid electrolyte membrane.

After that, the porous structure may be impregnated with a small amount of liquid electrolyte (S4). This is shown in FIG. 2(d). Herein, the impregnation with the liquid electrolyte may be carried out by any one of dip coating, spray coating and drop coating, but is not limited thereto. Meanwhile, the content of the liquid electrolyte may be 1-20 wt% based on the 100 wt% of the resultant solid-liquid hybrid electrolyte membrane.

After step (S4), the method may further include a step of removing the substrate. For example, the method may further include a step of removing a release film.

As a result, a solid-liquid hybrid electrolyte membrane may be obtained by the above-described method (FIG. 2(e)).

The examples and test examples will now be described. The following examples are for illustrative purposes only and not intended to limit the scope of this disclosure.

### Example 1

First, 100 mg of powder-type polyphenylene sulfide (average particle diameter: 10 µm) as a solid polymer particle was dispersed on a release-treated polyethylene terephthalate (PET) film to obtain a preliminary porous structure including polyphenylene sulfide dispersed therein. Herein, the preliminary porous structure had a thickness of 850 µm. Next, the preliminary porous structure was pressurized by passing it through a roll press having a gap of 250 µm between a first roller and a second roller facing the preliminary porous structure to obtain a porous structure having a thickness of 250 µm.

Then, the porous structure was drop coated with a liquid electrolyte (ethylene carbonate : ethyl methyl carbonate = 3 : 7 (vol%), LiPF₆ 1 M, vinylene carbonate 0.5 wt%, fluoroethylene carbonate 1 wt%), followed by drying. After that, the release film was removed to obtain a solid-liquid hybrid electrolyte membrane. The resultant solid-liquid hybrid electrolyte membrane had a thickness of 300 µm. Meanwhile, the porous structure had a porosity of 20 vol%, and the solid-liquid hybrid electrolyte membrane had a porosity of 2 vol% after it was drop coated with the liquid electrolyte.

In addition, the content of the liquid electrolyte in the solid-liquid hybrid electrolyte membrane was 18% based on the total weight of the solid-liquid hybrid electrolyte membrane.

### Example 2

A solid-liquid hybrid electrolyte membrane was obtained in the same manner as Example 1, except that the solid polymer particles were not used in the form of powder-type but in the form of a dispersion including polyphenylene sulfide (average particle diameter: 10 µm) as solid polymer particles dispersed in ethanol as a solvent at a concentration of 1 g/2 mL, and 3 mL of the dispersion was applied to a release-treated polyethylene terephthalate (PET) film, followed by drying.

Particularly, the dispersion was applied to and dried on the release-treated polyethylene terephthalate (PET) film to obtain a preliminary porous structure including polyphenylene sulfide dispersed therein. Herein, the preliminary porous structure had a thickness of 300 µm.

Next, the preliminary porous structure was pressurized by passing it through a roll press having a gap of 200 µm between a first roller and a second roller facing the preliminary porous structure to obtain a porous structure having a thickness of 200 µm.

Then, a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) was drop coated into the pores of the porous structure, followed by drying. After that, the release film was removed to obtain a solid-liquid hybrid electrolyte membrane. The resultant solid-liquid hybrid electrolyte membrane had a thickness of 200 µm.

### Example 3

A solid-liquid hybrid electrolyte membrane was obtained in the same manner as Example 2, except that 3 mL of the dispersion according to Example 2 was applied to and dried on the release film, and the resultant preliminary porous structure was passed through a roll press having a gap of 150 µm between a first roller and a second roller.

Herein, the preliminary porous structure had a thickness of 300 µm, and the resultant porous structure had a thickness of 150 µm. In addition, the resultant solid-liquid hybrid electrolyte membrane had a thickness of 150 µm.

### Example 4

A solid-liquid hybrid electrolyte membrane was obtained in the same manner as Example 2, except that 10 µL of the dispersion according to Example 2 was applied to and dried on the release film.

Herein, the preliminary porous structure had a thickness of 300 µm, and the resultant porous structure had a thickness of 200 µm. In addition, the resultant solid-liquid hybrid electrolyte membrane had a thickness of 200 µm.

### Example 5

A positive electrode was obtained as follows.

First, LiNi_{0.8}Co_{0.1}Mn_{0.1}O₂ (NCM811) as a positive electrode active material, FX35 as a conductive material and PVDF as a binder were mixed at a weight ratio of 96:2:2, and the resultant mixture was introduced to N-methyl-2-pyrrolidone as a solvent and stirred therein to prepare positive electrode slurry. The slurry was applied to an aluminum current collector having a thickness of 20 µm by using a doctor blade, and the resultant product was vacuum dried at 120°C for 4 hours. Then, the vacuum dried product was pressed by using a roll press to obtain a positive electrode having a positive electrode slurry loading amount of 3 mAh/cm² and a porosity of 22 vol%.

After that, 2 mL of the dispersion manufactured in Example 2 was applied to the positive electrode, followed by drying, to obtain a preliminary porous structure including polyphenylene sulfide dispersed therein. Herein, the preliminary porous structure had a thickness of 200 µm.

Then, the preliminary porous structure was pressurized by passing it through a roll press having a gap of 40 µm between a first roller and a second roller facing the preliminary porous structure to obtain a porous structure having a thickness of 40 µm.

Then, a liquid electrolyte (ethylene carbonate : ethyl methyl carbonate = 3 : 7 (vol%), LiPF₆ 1 M, vinylene carbonate 0.5 vol%, fluoroethylene carbonate 1 vol%) was drop coated into the pores of the porous structure, followed by drying, so that a solid-liquid hybrid electrolyte membrane was formed directly on the positive electrode.

The resultant solid-liquid hybrid electrolyte membrane had a thickness of 40 µm.

### Example 6

A solid-liquid hybrid electrolyte membrane was obtained in the same manner as Example 2, except that 2 mL of the dispersion according to Example 2 was applied to and dried on a polyethylene terephthalate non-woven web (porosity 87 vol%), and the resultant preliminary porous structure was passed through a roll press having a gap between a first roller and a second roller of 40 µm.

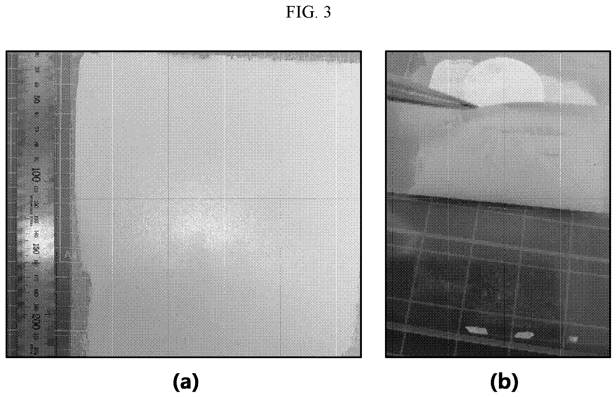

Herein, the preliminary porous structure had a thickness of 200 µm, and the resultant porous structure had a thickness of 40 µm. In addition, the resultant solid-liquid hybrid electrolyte membrane had a thickness of 40 µm. FIG. 3 illustrates an image of the solid-liquid hybrid electrolyte membrane obtained according to Example 6.

### Comparative Example 1

An electrolyte membrane was obtained in the same manner as Example 1, except that the liquid electrolyte was not impregnated.

Particularly, the electrolyte membrane was obtained as follows.

Powder-type polyphenylene sulfide (average particle diameter: 10 µm) as a solid polymer particle was dispersed on a release-treated polyethylene terephthalate (PET) film to obtain a preliminary porous structure including polyphenylene sulfide dispersed therein. Herein, the preliminary porous structure had a thickness of 850 µm.

Next, the preliminary porous structure was pressurized by passing it through a roll press having a gap of 300 µm between a first roller and a second roller facing the preliminary porous structure to obtain a porous structure having a thickness of 300 µm. After that, the release film was removed to obtain an electrolyte membrane. The resultant electrolyte membrane had a thickness of 300 µm, and the porous structure had a porosity of 27 vol%.

### Comparative Example 2

An electrolyte membrane was obtained by mixing a liquid electrolyte with solid polymer particles at once, not by impregnating a preliminarily formed porous structure with a liquid electrolyte subsequently. Particularly, the electrolyte membrane was obtained as follows.

First, powder-type polyphenylene sulfide (average particle diameter: 10 µm) was prepared as a solid polymer particle. In addition, as a liquid electrolyte, a mixture including ethylene carbonate : ethyl methyl carbonate = 3 : 7 (vol%), LiPF₆ 1 M, 0.5 vol% of vinylene carbonate and 1 vol% of fluoroethylene carbonate was prepared.

After that, the solid polymer particles were mixed with the liquid electrolyte at a ratio of 7:3 (vol%) to prepare a dispersion including the solid polymer particles dispersed therein. Then, the dispersion was applied to and dried on a polyethylene terephthalate film. Then, the resultant product was passed through a roll press in order to obtain an electrolyte membrane. However, it was not possible to obtain an electrolyte membrane. It is thought that this is because a high content of liquid electrolyte is used and the contact surfaces among the solid polymer particles are insufficient to cause degradation of adhesive force among the solid polymer particles, and the liquid electrolyte functions like lubricant oil, when passing the coated polyethylene terephthalate film through a roll press, and disturbs formation of a membrane.

### Comparative Example 3

An electrolyte membrane was obtained in the same manner as Comparative Example 2, except that the dispersion manufactured in Comparative Example 2 was applied to and dried on a non-woven web (porosity: 87 vol%) having a thickness of 38 µm instead of the polyethylene terephthalate film. In other words, in the electrolyte membrane of Comparative Example 3, the solid polymer particles are impregnated into the pores of the non-woven web substrate. When using a non-woven web to solve the problems of Comparative Example 2, an electrolyte membrane itself could be formed, but the electrolyte membrane showed non-uniform ion conductivity and the adhesive strength between the non-woven web and the solid polymer particles was low to cause degradation of durability. Therefore, the electrolyte membrane was limited in its maintenance.

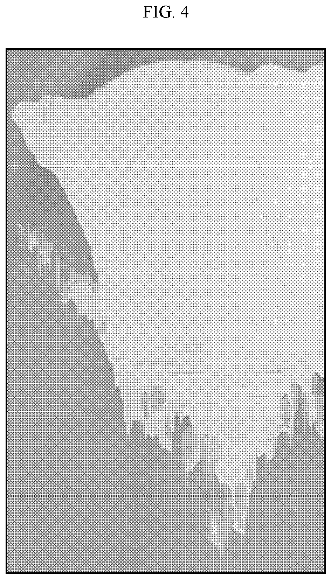

FIG. 4 illustrates an image of the electrolyte membrane obtained according to Comparative Example 3.

### Comparative Example 4

Comparative Example 4 relates to a conventional solid electrolyte membrane using a conventional solid electrolyte material.

Polyethylene oxide (PEO, Mw = 4,000,000 g/mol) was dissolved in acetonitrile (AN) as a solvent to prepare a polymer solution having a concentration of 4 wt%. Herein, LiTFSI as a lithium salt was added thereto to a molar ratio of [EO]/[Li⁺] of 18/1. The resultant mixture was stirred overnight at 70°C so that PEO and the lithium salt might be dissolved enough in the polymer solution. Next, an additive solution containing an initiator and a curing agent was prepared. The curing agent was PEGDA (M_{w} = 575), the initiator was benzoyl peroxide (BPO), polyethylene glycol diacrylate (PEGDA) was used in an amount of 20 wt% based on PEO, BPO was used in an amount of 1 wt% based on PEGDA, and acetonitrile was used as a solvent. The additive solution was stirred for about 1 hour so that the ingredients introduced thereto might be mixed thoroughly. Then, the additive solution was added to the polymer solution and the two solutions were mixed thoroughly. The mixed solution was applied to and coated on a release film by using a doctor blade. The coating gap was set to 300 µm and the coating rate was set to 20 mm/min. The release film coated with the coating solution was transferred to a glass plate, allowed to maintain level, dried overnight at room temperature, and vacuum dried at 100°C for 12 hours. In this manner, a solid electrolyte film was obtained. The resultant solid electrolyte layer had a thickness of about 50 µm.

### Comparative Example 5

An electrolyte membrane was obtained in the same manner as Comparative Example 2, except that the solid polymer particles and the liquid electrolyte were mixed at a volume ratio of 8:2. However, it was not possible to obtain flowable slurry itself for forming an electrolyte membrane due to a decrease in liquid electrolyte.

### Comparative Example 6

An electrolyte membrane was obtained in the same manner as Comparative Example 3, except that the solid polymer particles and the liquid electrolyte were mixed at a volume ratio of 8:2. However, it was not possible to obtain flowable slurry itself for forming an electrolyte membrane due to a decrease in liquid electrolyte.

**[Table 1]**

| | Porosity (%) of porous structure (before coating with liquid electrolyte) | Thickness (µm) of porous structure (after roll pressing) | Thickness (µm) of solid-liquid hybrid electrolyte membrane | Porosity (%) of solid-liquid hybrid electrolyte membrane (after coating with liquid electrolyte) | Content (%) of liquid electrolyte in solid-liquid hybrid electrolyte membrane (based on total weight of solid-liquid hybrid electrolyte membrane) | Free-standing possibility | Ion conductivity (S/cm) of solid-liquid hybrid electrolyte membrane |
|---|---|---|---|---|---|---|---|
| Ex. 1 | 20 | 250 | 250 | 2 | 18 | ○ | 5.96x10⁻⁴ |
| Ex. 2 | 20 | 200 | 200 | 0 | 20 | ○ | 6.12x10⁻⁴ |
| Ex. 3 | 7 | 150 | 150 | 0 | 7 | ○ | 4.71x10⁻⁴ |
| Ex. 4 | 10 | 200 | 200 | 10 | 10 | ○ | 3.36x10⁻⁴ |
| Ex. 5 | 18 | 40 | 40 | 0 | 18 | ○ | Coated on electrode, and difficult to determine |
| | | | | | | | ion conductivity |
| Ex. 6 | 21 | 40 | 40 | 0 | 20 | ○ | 5.39x10⁻⁴ |
| Comp. Ex. 1 | 27 | 300 | 300 | - | - | ○ | Ion conductivity cannot be determined due to excessively low ion conductivity |
| Comp. Ex. 2 | <3 | Cannot be manufactured | Cannot be manufactured | - | - | X | - |
| Comp. Ex. 3 | <3 | Cannot be manufactured | Cannot be manufactured | - | - | ○ (Possible because of non-woven web but non-uniform) | - |
| Comp. Ex. 4 | <5 | 50 | 50 | - | - | ○ | 9.95x10⁻⁵ (at 60°C) |
| Comp. Ex. 5 | <3 | Cannot be manufactured | Cannot be manufactured | - | - | - | - |
| Comp. Ex. 6 | <3 | Cannot be manufactured | Cannot be manufactured | - | - | - | - |

In Table 1, porosity (%) refers to vol%.

As can be seen from Table 1, solid polymer particles having no ion conductivity are used according to an embodiment of the present disclosure to form a porous structure capable of free-standing. In addition, the inside of the porous structure was coated with a small amount of liquid electrolyte to obtain a solid-liquid hybrid electrolyte membrane having high ion conductivity. The solid-liquid hybrid electrolyte membrane according to an embodiment of the present disclosure showed excellent properties, such as physical properties or ion conductivity, as compared to solid electrolytes exemplified by conventional polyethylene oxide (Comparative Example 4). On the contrary, even when using the liquid electrolyte and solid polymer particles at the same ratio as Example 1, mixing both materials at once couldn't provide a free-standing porous structure, as demonstrated by Comparative Example 2. Meanwhile, when introducing a separator such as a non-woven web in order to solve the problem of Comparative Example 2, an electrolyte membrane itself could be formed, but the ion conductivity in the electrolyte membrane was not uniform and the durability was degraded due to low adhesion strength between the non-woven web and the solid polymer particles. In this case, the electrolyte membrane couldn't be retained continuously.

### Determination of Porosity

Each of the electrolyte membranes according to Examples and Comparative Examples was cut into a size of 1.7671 cm², the weight and volume of each electrolyte membrane were measured (apparent density was measured), and the apparent density was compared with a designed value (true density) to calculate the porosity. In other words, the true density of each solid electrolyte membrane was calculated from the compositional ratio of the ingredients contained in the solid electrolyte membrane and the density of each ingredient, and then the porosity was calculated from the difference between the apparent density and the true density.

### Determination of Ion Conductivity of Electrolyte Membrane

Each of the electrolyte membranes according to Examples and Comparative Examples was cut into a circular shape having a size of 1.7671 cm², and the electrolyte membrane was disposed between two stainless steel sheets to obtain a coin-cell. Then, electrochemical impedance was measured by using an analyzer (VMP3, Biologic science instrument) at room temperature under the conditions of an amplitude of 10 mV and a scan range of 500 kHz to 0.1 MHz. Based on this, ion conductivity was calculated.

### Determination of Content of Liquid Electrolyte in Solid-Liquid Hybrid Electrolyte Membrane

The content of a liquid electrolyte in a solid-liquid hybrid electrolyte membrane was calculated by the formula of [Weight of solid-liquid hybrid electrolyte membrane - Weight of porous structure].

## Claims

1. A solid-liquid hybrid electrolyte membrane comprising a plurality of solid polymer particles and a small amount of liquid electrolyte, and having an ion conductivity of 1x10⁻⁵ to 1x10⁻¹ S/cm,
wherein the solid polymer particles are packed, while being in contact with one another, and comprise a porous structure having a pore structure formed among the solid polymer particles,
the liquid electrolyte surrounds the inside of the pores of the porous structure, the portions in which the solid polymer particles are in surface contact with one another, or the surfaces of the solid polymer particles, and
the content of the liquid electrolyte is 1-20 wt% based on 100 wt% of the total content of the solid-liquid hybrid electrolyte membrane.

2. The solid-liquid hybrid electrolyte membrane according to claim 1, wherein the porous structure itself has a higher porosity than the porosity of the solid-liquid hybrid electrolyte membrane.

3. The solid-liquid hybrid electrolyte membrane according to claim 1, which has a higher ion conductivity than the ion conductivity of the porous structure itself.

4. The solid-liquid hybrid electrolyte membrane according to claim 1, wherein the solid polymer particle is an engineering plastic resin.

5. The solid-liquid hybrid electrolyte membrane according to claim 1, wherein the solid polymer particle comprises any one selected from polyphenylene oxide, polyetherether ketone, polyimide, polyamideimide, liquid crystal polymer, polyether imide, polysulfone, polyarylate, polyethylene terephthalate, polybutylene terephthalate, polyoxymethylene, polycarbonate, polypropylene, polyethylene and polymethyl methacrylate, or two or more of them.

6. The solid-liquid hybrid electrolyte membrane according to claim 1, which is free of a binder polymer.

7. The solid-liquid hybrid electrolyte membrane according to claim 1, wherein the porous structure itself has a porosity of 1-90 vol%, and the solid-liquid hybrid electrolyte membrane has a porosity of 0-80 vol%, which is lower than the porosity of the porous structure itself.

8. The solid-liquid hybrid electrolyte membrane according to claim 1, which has a thickness of 10-500 µm.

9. A solid-state battery which comprises a positive electrode comprising a solid electrolyte, a negative electrode comprising a solid electrolyte, and a separator interposed between the positive electrode and the negative electrode, wherein the separator comprises the solid-liquid hybrid electrolyte membrane as defined in any one of claims 1 to 8.

10. A lithium-ion battery comprising a positive electrode, a negative electrode, a separator interposed between the positive electrode and the negative electrode, and a liquid electrolyte, wherein the separator comprises the solid-liquid hybrid electrolyte membrane as defined in any one of claims 1 to 8.

11. A method for manufacturing a solid-liquid hybrid electrolyte membrane, comprising the steps of:
(S1) preparing a plurality of solid polymer particles itself, or a dispersion containing a plurality of solid polymer particles dispersed in a solvent;
(S2) applying the solid polymer particles itself or the dispersion onto a substrate, followed by drying;
(S3) pressurizing the resultant product of step (S2) to form a porous structure; and
(S4) coating the porous structure with a small amount of liquid electrolyte,
wherein the solid polymer particles are packed, while being in contact with one another, and comprise a porous structure having a pore structure formed among the solid polymer particles,
the liquid electrolyte surrounds the portions in which the solid polymer particles are in surface contact with one another, or the surfaces of the solid polymer particles, and
the content of the liquid electrolyte is 1-20 wt% based on 100 wt% of the total content of the solid-liquid hybrid electrolyte membrane.

12. The method for manufacturing a solid-liquid hybrid electrolyte membrane according to claim 11, wherein the substrate is any one selected from a release film, a porous polymer substrate or an electrode.

13. The method for manufacturing a solid-liquid hybrid electrolyte membrane according to claim 11, wherein the pressurization in step (S3) is a step of binding the solid polymer particles physically or chemically with one another to obtain a porous structure having a pore structure formed among the solid polymer particles.

14. The method for manufacturing a solid-liquid hybrid electrolyte membrane according to claim 11, wherein the coating in step (S4) is carried out by any one of dip coating, spray coating and drop coating.
